# EUROPEAN PATENT APPLICATION

(11) **EP 4 671 528 A1**
(43) Date of publication of application: **31.12.2025**
(21) Application number: 24183907.5
(22) Date of filing: 24.06.2024
(51) Int. Cl.: F03D 1/06, B29D 99/00

(54) **A METHOD OF MANUFACTURING AND MOUNTING A WIND TURBINE BLADE TO A PITCH BEARING OF A WIND TURBINE AND SUCH A WIND TURBINE BLADE**

(71) Applicant: LM Wind Power A/S, 6000 Kolding (DK)
(72) Inventor: H, Rakesh Shivanna, Bengaluru (IN)
(74) Representative: COPA Copenhagen Patents

(57) **Abstract**

A method of manufacturing a wind turbine blade for a horizontal axis wind turbine (2), and mounting it to the pitch bearing of a hub of a wind turbine is described. The method comprises the steps of: manufacturing (402) a first wind turbine blade shell part; manufacturing (404) a second wind turbine blade shell part; assembling (406) at least the first wind turbine blade shell part and the second wind turbine blade shell part to form at least part of a shell body of the wind turbine blade, wherein the wind turbine blade extends between a root end and a tip end, and wherein the first wind turbine blade shell part and the second wind turbine blade shell part are at least adhered to each other along a first bond line that extends to the root end of the wind turbine blade; providing (408) a ring-shaped root end flange, which is configured to be connected to the root end of the shell body, and which is configured with a bond line marker, preferably on an inner circumference of the ring-shaped root end flange, and further configured with a pitch-angle marker; attaching (410) the ring-shaped root end flange to a root end face of the shell body, such that the ring-shaped root end flange covers the first bond line, and the bond line marker is aligned with the first bond line; and mounting (412) the wind turbine blade including the ring-shaped root end flange to the pitch bearing of the hub of the wind turbine, such that the pitch-angle marker is aligned with a zero-pitch position for the pitch bearing.

## Description

### FIELD OF THE INVENTION

The present disclosure relates to a method of manufacturing and mounting a wind turbine blade to a pitch bearing of a wind turbine. The present disclosure further relates to a wind turbine blade for mounting to a pitch bearing of a horizontal axis wind turbine. The present disclosure also relates to a horizontal axis wind turbine.

### BACKGROUND OF THE INVENTION

Wind power is increasingly popular due to its clean and environmentally friendly production of energy. The rotor blades of modern wind turbines capture kinetic wind energy by using sophisticated blade design created to maximise efficiency.

The wind turbine blades are mounted to pitch bearings in the hub of the wind turbine. The blades may be pitched in order to optimise the capture of energy from the wind. In order to maximise energy yield it is crucial that the wind turbine blades are correctly aligned to the pitch bearing, such that the blades are pitched correctly in relation to the wind. Inaccurate pitch alignment may lead to decrease in energy yield as well as to unintended loads to the rotor of the wind turbine.

To this end, the wind turbine blades are often provided with markers on the exterior of the blade in order to indicate a 0-degree pitch orientation of the blade in order to ensure a proper mounting to the pitch bearings. Additionally, the positions for root end bushings need to be carefully aligned with the blade profile to ensure that the blade can be properly installed to the pitch bearing. Although this seems like a simple task, experience has shown that it is a difficult and cumbersome to provide the blade with accurate 0-degree pitch markers on the blade. The marking requires large tools for providing markings on the inner or outer shell of the wind turbine blade and is difficult and time consuming to handle. Further, despite the markers, the wind turbine installers often still mount the wind turbine blades at an incorrect pitch angle, thus leading to the decrease in energy yield and increase in loads.

It is therefore an object of the invention to provide an improved method of manufacturing and mounting such blades to the pitch bearing of a wind turbine as well as a new wind turbine blade that at least ameliorate some of the drawbacks found in prior art designs.

### SUMMARY OF THE INVENTION

Thus, according to a first aspect, there is provided a method of manufacturing a wind turbine blade for a horizontal axis wind turbine, and mounting it to the pitch bearing of a hub of a wind turbine, wherein the method comprises the steps of: manufacturing a first wind turbine blade shell part; manufacturing a second wind turbine blade shell part; assembling at least the first wind turbine blade shell part and the second wind turbine blade shell part to form at least part of a shell body of the wind turbine blade, wherein the wind turbine blade extends between a root end and a tip end, and wherein the first wind turbine blade shell part and the second wind turbine blade shell part are at least adhered to each other along a first bond line that extends to the root end of the wind turbine blade; providing a ring-shaped root end flange, which is configured to be connected to the root end of the shell body, and which is configured with a bond line marker, preferably on an inner circumference of the ring-shaped root end flange, and further configured with a pitch-angle marker; attaching the ring-shaped root end flange to a root end face of the shell body, such that the ring-shaped root end flange covers the first bond line and the bond line marker is aligned with the first bond line; and mounting the wind turbine blade including the ring-shaped root end flange to the pitch bearing of the hub of the wind turbine, such that the pitch-angle marker is aligned with a zero-pitch position for the pitch bearing.

Thereby, there is provided a method that simplifies and optimises the manufacture of wind turbine blades with markings for aligning the blade correctly relative to the pitch bearing of a wind turbine and further provides a simple way of optimising the correct alignment of the wind turbine blade on the pitch bearing of the wind turbine. Thus, the method both simplifies and optimises the manufacture of the blade as well as contributes to avoiding inaccurate pitch alignment that may lead to decrease in energy yield as well as to unintended loads to the rotor of the wind turbine. Further, by letting the ring-shaped root end flange cover the bond line, additional mechanical strength can be provided around the joint at the first bond line.

The pitch-angle marker or markers are preferably provided on an inner or outer circumference of the ring-shaped root end flange, or both. The pitch-angle marker may also comprise a line extending along a radius of the ring-shaped root end flange.

It is also clear that the ring-shaped root end flange is formed as part of the wind turbine blade and is separate and distinct from the pitch bearing, which in turn may comprise individual pitch-bearing rings.

The bond lines as described herein are to be understood as the bond line at the root end face of the blade shell. Thus, the bond line refers to the surface or boundary between the shell parts that are adhered to each other and is formed when the two shell parts are adhered to each other. As will be clear from the following, the shell body is preferably made from two shell parts that are adhered to each other along two bond lines, e.g. at the leading edge and the trailing edge of the shell body. However, in principle, the shell body may also comprise additional shell parts, in which case the two shell parts may be adhered to each other along only one bond line, preferably at the leading edge of the shell body. However, additional bond lines may be required to adhere the first shell part and the second shell part to the additional shell part(s). This can for instance be necessary for flatback or truncated profiled, where a separate shell part can be used for forming the flatback part of the shell body. In such a case, two bond lines may be located at the trailing edge of the shell body. It is also clear that the bond lines extend in the longitudinal direction of the wind turbine blade and may extend all the way to the tip end of the blade.

Similarly, according to a second aspect, there is provided a wind turbine blade for a horizontal axis wind turbine, wherein the wind turbine blade extends in a longitudinal direction parallel to a longitudinal axis and having a tip end and a root end, and wherein the wind turbine blade comprises: a shell body, which is formed by at least a first wind turbine blade shell part and a second wind turbine blade shell part, wherein the first wind turbine blade shell part and the second wind turbine blade shell part are at least adhered to each other along a first bond line that extends to the root end of the wind turbine blade, and a ring-shaped root end flange attached to a root end face of the shell body and extending circumferentially along the entire root end of the wind turbine blade, wherein the ring-shaped root end flange is provided with a bond line marker, preferably on an inner circumference of the ring-shaped root end flange, and further provided with a pitch-angle marker; wherein the ring-shaped root end flange is attached to the root end face of the shell body, such that the ring-shaped the root end flange covers the first bond line and the bond line marker is aligned with the first bond line.

In the following, various embodiments are described that are applicable to any of the above-mentioned aspects. The embodiments can be combined with each other.

According to a preferred embodiment, the first bond line is located along a leading edge or a trailing edge of the shell body of the wind turbine blade, preferably along the leading edge of the shell body of the wind turbine blade. Thereby, the bond line marker and the pitch-angle marker can be located near each other, in particular if the pitch-angle marker provides a zero-pitch angle marker. Thus, it is also clear that the bond line marker and the pitch-angle marker preferably are arranged near each other, such as within 10 degrees of each other along the ring-shaped root end flange, preferably within 8 degrees of each other.

According to another preferred embodiment, the first wind turbine blade shell part and the second wind turbine blade shell part are further adhered to each other along a second bond line. The second bond line may advantageously be located along a trailing edge or a leading edge of the shell body of the wind turbine blade, e.g. along a trailing edge of the shell body of the wind turbine blade. Thus, the wind turbine blade shell may be constructed from half shell parts, such as an upwind shell part and a downwind shell part (or equivalently a pressure side shell part and a suction side shell part).

Similarly, the ring-shaped root end flange may be arranged mounted to cover the second bond line. Thus, the ring-shaped root end flange may provide additional mechanical strength around the joint at the second bond line between the two shell parts. According to a preferred embodiment, the ring-shaped root end flange comprises a second bond line marker, preferably on the inner circumference of the ring-shaped root end flange and is attached to the root end face of the shell body such that the second bond line marker is aligned with the second bond line. This provides a further marker to ensure that the pitch-angle marker is arranged correctly and that the blade shell parts are assembled correctly.

According to yet another preferred embodiment, the ring-shaped body is further provided with a second pitch-angle marker. The second pitch-angle marker or markers are preferably provided on an inner or outer circumference of the ring-shaped root end flange, or both. The pitch-angle marker may also comprise a line extending along a radius of the ring-shaped root end flange. The second pitch-angle marker provides additional measures to ensure that the wind turbine blade is arranged correctly on the pitch bearing, thereby ensuring optimised loads and energy yield for the installed wind turbine blade.

Similar to the first bond line and the first pitch-angle marker, the second bond line marker and the second pitch-angle marker are arranged near each other, such as within 10 degrees of each other along the ring-shaped root end flange, preferably within 8 degrees of each other.

According to a preferred embodiment, the first wind turbine blade shell part and the second wind turbine blade shell part are manufactured with a plurality of bushings embedded in the respective shell part, and wherein the ring-shaped root end flange is provided with a plurality of holes that are aligned with the plurality of bushings. Thus, the bushings can be utilised to attach the blade along with the ring-shaped root flange to the pitch bearing via stay bolts attached through corresponding holes in inner or outer bearings of the pitch bearing. Accordingly, according to another preferred embodiment, the mounting of the wind turbine blade comprises inserting a plurality of stay bolts through the pitch bearing, corresponding holes in the ring-shaped root end flange, and connecting them to corresponding bushings embedded in the first wind turbine blade shell part and the second wind turbine blade shell part.

According to another preferred embodiment, the ring-shaped root end flange is segmented into a plurality of individual flange parts that together form the ring-shaped root end flange. This makes the ring-shaped root end flange easier to handle and install correctly on the root end face of the shell body. The plurality of individual flange parts may advantageously be connected to each other, e.g. via a mating connection, such as a dovetail joint.

By "covering" is meant that the individual flange parts are arranged such that one individual flange part extends across the bond line, such that the connection or joints between individual flange parts are spaced in the circumferential direction from the bond line. Thereby, the mechanical strength across the joint is ensured. The ring-shaped root end flange preferably comprises one of: two individual flange parts, each extending along 180 degrees of the ring-shaped root end flange; three individual flange parts, each extending along 120 degrees of the ring-shaped root end flange; and four individual flange parts, each extending along 90 degrees of the ring-shaped root end flange. The ring-shaped root end flange may even be divided into 5, 6, 7, 8, 9, 10 or even more segments. In light of wind turbines blades becoming larger and larger, the root diameter also increases. Thereby, it is beneficial to segment the flange parts for easier handling. For very long blades, the ring-shaped root end flange may advantageously be divided into 5-8 individual segments, e.g. 6 or 8 segments. Above, the segments have been described as extending along the same angular extent of the root end of the blade. However, the segments can also have different sizes.

The ring-shaped root end flange is made from a metal, such as stainless steel. This ensures the required strength for the root end flange and for attaching the blade to the pitch bearing of the wind turbine.

According to a third aspect, there is provided a horizontal axis wind turbine comprising a rotor including a hub and a number of, preferably two or three, wind turbine blades as described in any of the aforementioned embodiments, wherein each wind turbine blade is attached to a pitch bearing in the hub, such that the pitch-angle marker of the wind turbine blade is aligned with a zero-pitch position for the pitch bearing.

According to a preferred embodiment, each wind turbine blade is mounted to the pitch bearing via a plurality of stay bolts through the pitch bearing, corresponding holes in the ring-shaped root end flange of the wind turbine blade and connected to corresponding bushings embedded in the first wind turbine blade shell part and the second wind turbine blade shell part.

According to another preferred embodiment, each pitch bearing comprises an inner pitch bearing ring and an outer pitch bearing ring, which are pitchable relative to each other. Each wind turbine blade is preferably mounted to the inner pitch bearing ring of the pitch bearing.

The pitch system of the wind turbine preferably comprises a pitch drive, such as a teethed drive, to pitch the pitch bearing and the wind turbine blade.

The bond line marker or markers, and the pitch-angle marker or markers, may have different forms or shapes to clearly mark the difference between the two types of markers. Both set of markers may be formed as a notch or notches on the inner or outer circumference of the ring-shaped root end flange. The bond line marker or markers may for instance be formed as a half-moon shaped notch or notches, and the pitch-angle marker or markers as a V-shaped notch or notches, or vice versa.

### DETAILED DESCRIPTION OF THE INVENTION

Embodiments of the invention will now be described, by way of example only, with reference to the accompanying drawings, in which:
Fig. 1 shows a wind turbine,
Figs. 2a and 2b show a schematic view of a wind turbine blade,
Fig. 3 shows a schematic view of an airfoil profile of the wind turbine blade,
Fig. 4 shows a schematic view of the wind turbine blade, seen from above and from the side,
Fig. 5 shows a longitudinal sectional view through a root section of the wind turbine blade connected to a hub of a rotor of the wind turbine,
Figs. 6a-6d show schematic views of different exemplary ring-shaped root end flanges, and
Fig. 7 illustrates the steps in a method of manufacturing a wind turbine blade for a horizontal axis wind turbine and mounting it to the pitch bearing of a hub of a wind turbine.

It will be understood that elements common to the different embodiments of the invention have been provided with the same reference numerals in the drawings.

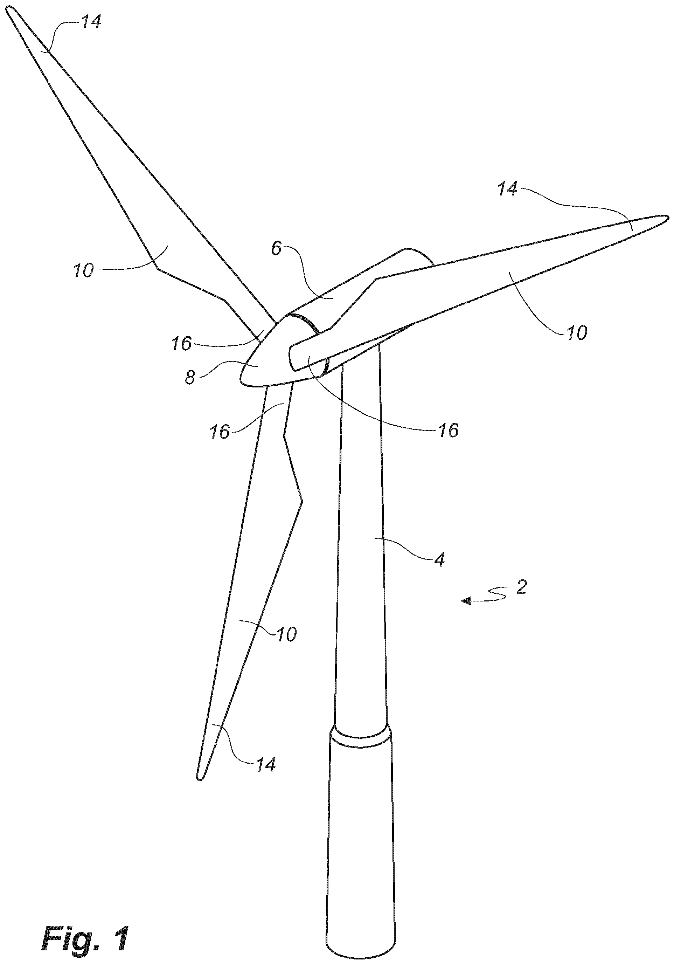

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8, the blade extending in a spanwise direction between the root 16 and the tip 14. The rotor has a radius denoted R.

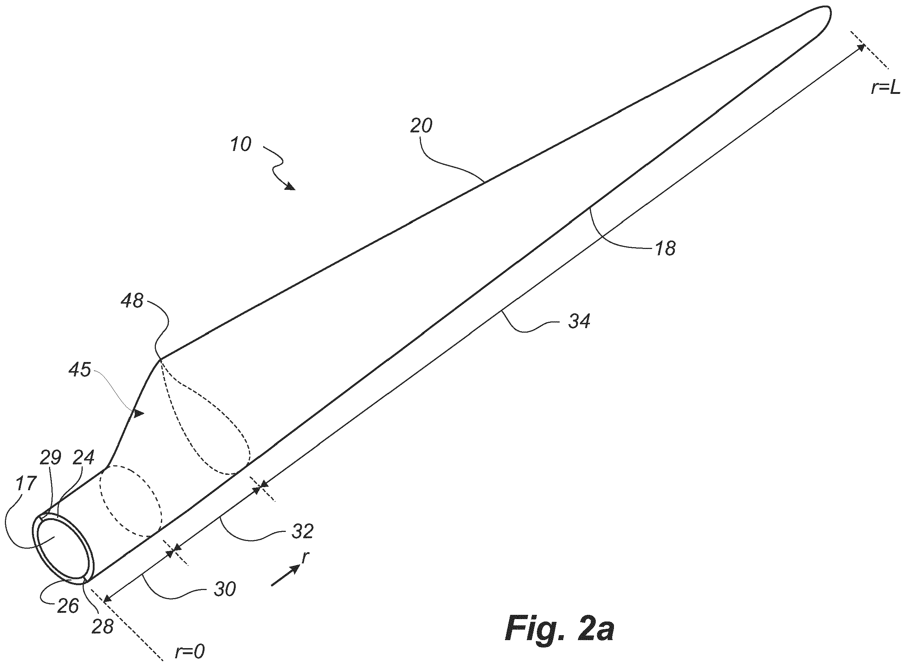

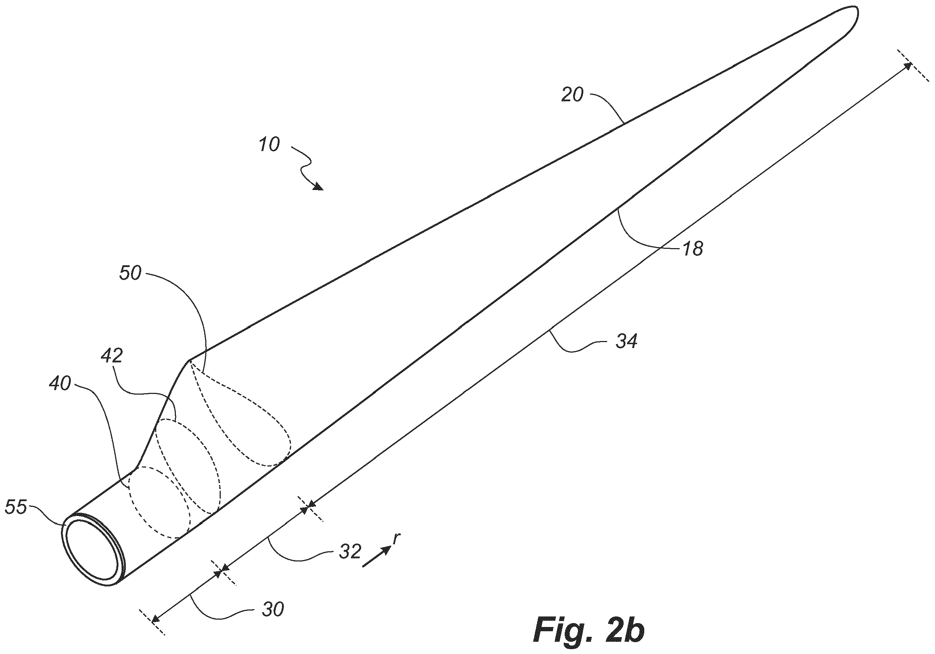

Fig. 2 shows a schematic view of a wind turbine blade 10, where Fig. 2a shows the wind turbine blade without a root end flange shown, and Fig. 2b shows the wind turbine blade 10 with the root end flange shown. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18. An array of trailing edge serrations is provided along a portion of the trailing edge 20 of the blade. In general, flow of air over the wind turbine blade 10 extends from the leading edge 18 to the trailing edge 20 in a generally transverse or chordwise direction.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 is typically constant along the entire root area 30. The transition region 32 has a transitional profile 42 gradually changing from the circular or elliptical shape 40 of the root region 30 to the airfoil profile 50 of the airfoil region 34. The chord length of the transition region 32 typically increases substantially linearly with increasing distance *r* from the hub.

The airfoil region 34 has an airfoil profile 50 with a chord extending between the leading edge 18 and the trailing edge 20 of the blade 10. The width of the chord decreases with increasing distance *r* from the hub.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a shell body 45, which is made of a fibre-reinforced polymer material, e.g. a polymer matrix reinforced with glass fibres and/or carbon fibres and is further, as shown in Fig. 2b, provided with a ring-shaped root end flange 55 connected to a root end face 17 of the shell body 45. As shown in Fig. 2a, the shell body 45 is often made of an upwind blade shell part 24 (or pressure side shell part) and a downwind blade shell part 26 (or suction side shell part), which are bonded to each other near the leading edge 18 along a first bond line 28 and the trailing edge 20 of the blade 10 along a second bond line 29. Wind turbine blades are generally formed from fibre-reinforced plastics material, e.g. glass fibres and/or carbon fibres which are arranged in a mould and cured with a resin to form a solid structure. Modern wind turbine blades can often be more than 50 metres, and even more than 100 metres, in length, having blade root diameters of several metres. Wind turbine blades are generally designed for relatively long lifetimes and to withstand considerable structural and dynamic loading. The zero-pitch angle of the wind turbine blade 10 is located close to the bond lines 28, 29 of the shell parts 24, 26.

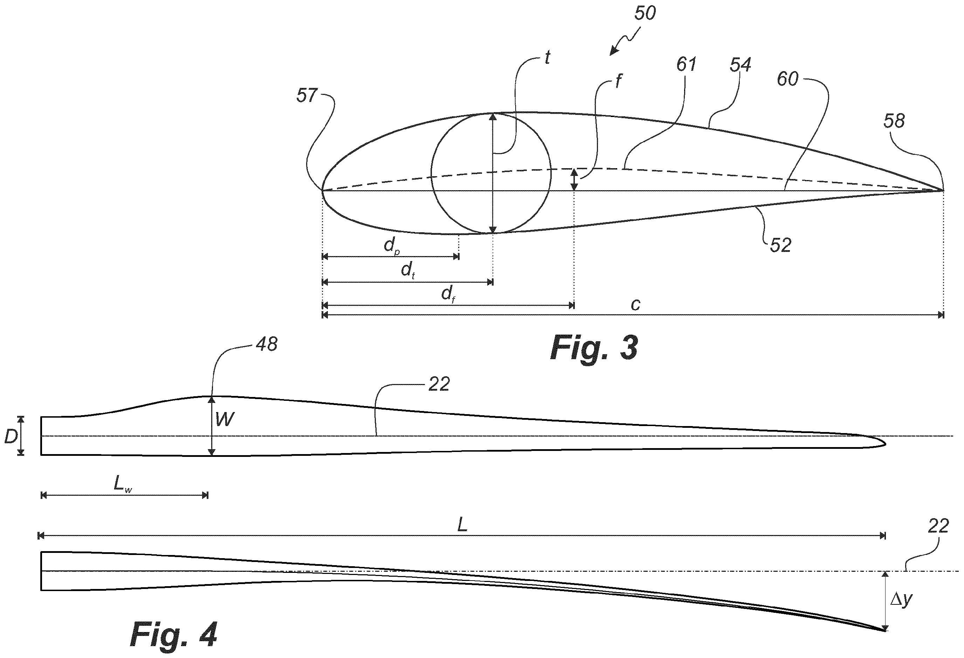

Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 57 and a trailing edge 58 of the blade. The airfoil 50 has a thickness t, which is defined as the distance between the pressure side 52 and the suction side 54. The thickness tof the airfoil varies along the chord 60. The deviation from a symmetrical profile is given by a camber line 61, which is a median line through the airfoil profile 50. The median line can be found by drawing inscribed circles from the leading edge 57 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber f, the position *d_{f}* of the maximum camber *f*, the maximum airfoil thickness *t,* which is the largest diameter of the inscribed circles along the median camber line 61, the position *dₜ* of the maximum thickness *t*, and a nose radius (not shown). These parameters are typically defined as ratios to the chord length *c*. Thus, a local relative blade thickness *t*/*c* is given as the ratio between the local maximum thickness *t* and the local chord length *c*. Further, the position *dₚ* of the maximum pressure side camber may be used as a design parameter, and of course also the position of the maximum suction side camber.

Fig. 4 shows some other geometric parameters of the blade. The blade has a total blade length *L*. As shown in Fig. 2, the root end is located at position *r*= 0, and the tip end is located at *r*= *L.* The shoulder 48 of the blade is located at a position *r*= *L_{w},* and has a shoulder width *W*, which equals the chord length at the shoulder 48. The diameter of the root is defined as *D*. Further, the blade is provided with a pre-bend, which is defined as *Δy,* which corresponds to the out-of-plane deflection from a pitch axis 22 of the blade.

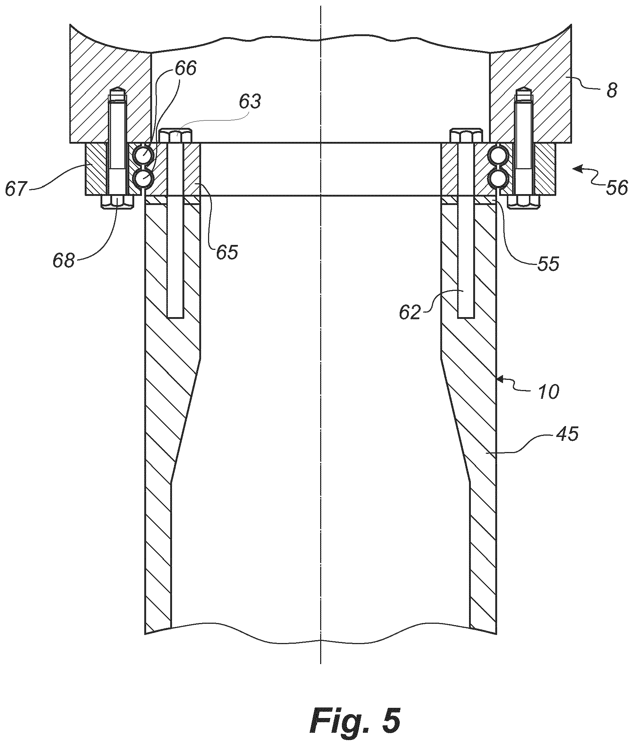

Fig. 5 shows a longitudinal sectional view through a root section of an embodiment of the wind turbine blade 10 connected to the hub 8 of the rotor of the wind turbine 2.

In the embodiment shown in Fig. 5, the blade 10 comprises a root end flange 55 forming part of a hub-to-root connection between the root of the blade and a pitch bearing 56 of the hub 8. The pitch bearing 56 comprises an outer pitch bearing ring 67 and an inner pitch bearing ring 65. The inner pitch bearing ring 65 is connected to the blade via the root end flange 55 and a plurality of fastening elements 62 for instance in form of a bushing and bolt connection, e.g. with a plurality of bushings 62 embedded in the shell body 45 of the blade and connected to the inner pitch bearing ring 65 of the pitch bearing 56 via a plurality of corresponding stay bolts 63. The number of bushings 62 and bolts 63 may e.g. be 50-150. However, for very large blades with a large root diameter, it is even contemplated that the number of bolts may be higher than 150.

The outer ring 67 of the pitch bearing 56 is stationary mounted to the hub 8 of the wind turbine, which can also be obtained by a plurality of fasteners 68, such as bolts. The inner ring 66 and the outer ring 67 of the pitch bearing 56 may be rotated relative to each other via a plurality of ball bearings 66 such that the blade 10 may be pitched relative to the hub 8, e.g. via a pitch drive (not shown).

The bolts 63, 68 and bushings 62 as well as the root end flange 55 and the inner and outer rings 66, 67 of the pitch bearing 56 are preferably made of a metal, such as stainless steel. It is also possible to attach the blades in other ways, e.g. by use of T-bolts and barrel nuts.

As shown in Fig. 5, the pitch bearing 56 is advantageously a ball bearing. The pitch bearing 56 could, however, also be any kind of bearing, including a roller bearing or a combination of a roller bearing and a ball bearing.

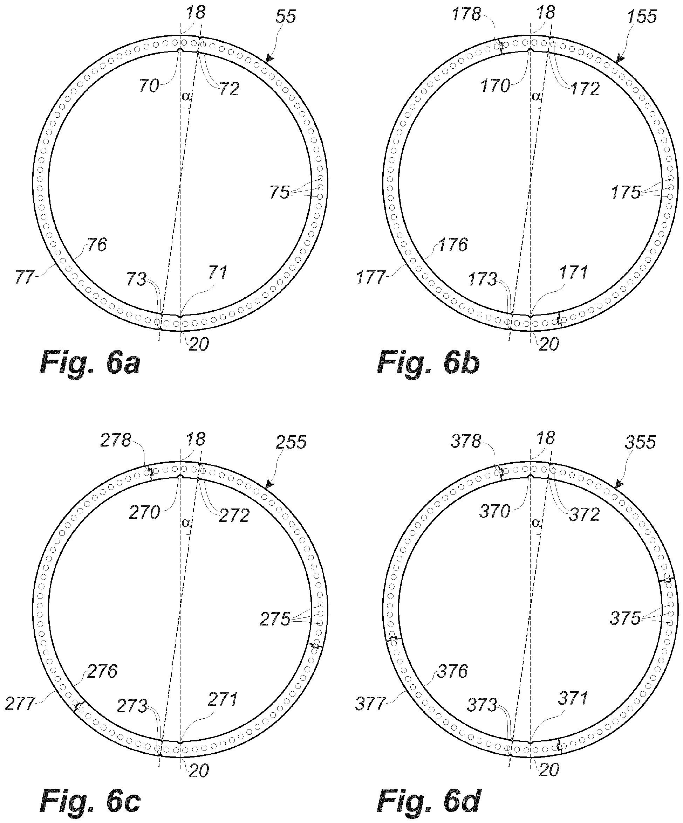

Figs. 6a-6d show different exemplary embodiments of ring-shaped root end flanges. In the different embodiments, like reference numerals refer to like parts.

Fig. 6a shows a first embodiment, wherein the ring-shaped root end flange 55 is formed as a unitary part. The ring-shaped root end flange 55 is attached to the root end face 17 of the shell body 45 and extends circumferentially along the entire root end 16 of the wind turbine blade 10. The ring-shaped root end flange 55 is provided with a first bond line marker 70 on an inner circumference 76 of the ring-shaped root end flange 55 and further provided with a first pitch-angle marker 72, which has marks on both the inner circumference 76 and on an outer circumference 77 of the ring-shaped root end flange 55. The ring-shaped root end flange 55 is attached to the root end face 17 of the shell body 45, such that the ring-shaped root end flange 55 covers the first bond line 28 (not shown) at the leading edge 18 of the shell body 45, and the bond line marker 70 is aligned with the first bond line 28. The ring-shaped root end flange 55 is further attached to the root end face of the shell body 45, such that it covers the second bond line 29 at the trailing edge 20 of the shell body 45. The ring-shaped root end flange 55 comprises a second bond line marker 71 on the inner circumference 76 of the ring-shaped root end flange 55 and is attached to the root end face of the shell body 45 such that the second bond line marker 71 is aligned with the second bond line 29. The ring-shaped body is further provided with a second pitch-angle marker 73, which has marks on both the inner circumference 76 and on an outer circumference 77 of the ring-shaped root end flange 55. The first pitch-angle marker 72 and the second pitch-angle 73 are preferably aligned with a zero-pitch position of the pitch bearing 56, when the wind turbine blade 10 is mounted to the pitch bearing 56. As shown in Fig. 6a, the first bond line marker 70 is provided near the first pitch-angle marker 72, and the second bond line marker 71 is provided near the second pitch-angle marker 73. The markers may for example be arranged within 10 degrees of each other in a circumferential direction of the ring-shaped root end flange 55, preferably within 8 degrees of each other. The angle between the two markers may for instance be aligned with the design angle of attack of the wind turbine blade 10 at the design point of the wind turbine. The ring-shaped root end flange 55 is further provided with a plurality of holes 75 that are aligned with the plurality of bushings 62 of the wind turbine blade 10.

Fig. 6b shows a second embodiment, wherein a ring-shaped root end flange 155 is formed by two segments. The ring-shaped root end flange 155 is attached to the root end face 17 of the shell body 45 and extends circumferentially along the entire root end 16 of the wind turbine blade 10. The ring-shaped root end flange 155 is provided with a first bond line marker 170 on an inner circumference 176 of the ring-shaped root end flange 155 and further provided with a first pitch-angle marker 172, which has marks on both the inner circumference 176 and on an outer circumference 177 of the ring-shaped root end flange 155. The ring-shaped root end flange 155 is attached to the root end face 17 of the shell body 45, such that the ring-shaped root end flange 155 covers the first bond line 28 (not shown) at the leading edge 18 of the shell body 45, and the bond line marker 170 is aligned with the first bond line 28. The ring-shaped root end flange 55 is further attached to the root end face of the shell body 45, such that it covers the second bond line 29 at the trailing edge 20 of the shell body 45. The ring-shaped root end flange 155 comprises a second bond line marker 171 on the inner circumference 176 of the ring-shaped root end flange 155 and is attached to the root end face of the shell body 45 such that the second bond line marker 171 is aligned with the second bond line 29. The ring-shaped body is further provided with a second pitch-angle marker 173, which has marks on both the inner circumference 176 and on an outer circumference 177 of the ring-shaped root end flange 55. The first pitch-angle marker 172 and the second pitch-angle 173 are preferably aligned with a zero-pitch position of the pitch bearing 56, when the wind turbine blade 10 is mounted to the pitch bearing 56. As shown in Fig. 6a, the first bond line marker 170 is provided near the first pitch-angle marker 172, and the second bond line marker 171 is provided near the second pitch-angle marker 173. The markers may for example be arranged within 10 degrees of each other in a circumferential direction of the ring-shaped root end flange 155, preferably within 8 degrees of each other. The angle between the two markers may for instance be aligned with the design angle of attack of the wind turbine blade 10 at the design point of the wind turbine. The ring-shaped root end flange 155 is further provided with a plurality of holes 175 that are aligned with the plurality of bushings 62 of the wind turbine blade 10. Compared to the first embodiment, the ring-shaped root end flange 155 is divided into two segments that each extends along 180 degrees of the ring-shaped root end flange 155. The two segments are connected to each other via a mating connection depicted as a dovetail joint.

Fig. 6c shows a third embodiment, wherein a ring-shaped root end flange 255 is formed by three segments. The ring-shaped root end flange 255 is attached to the root end face 17 of the shell body 45 and extends circumferentially along the entire root end 16 of the wind turbine blade 10. The ring-shaped root end flange 255 is provided with a first bond line marker 270 on an inner circumference 276 of the ring-shaped root end flange 255 and further provided with a first pitch-angle marker 272, which has marks on both the inner circumference 276 and on an outer circumference 277 of the ring-shaped root end flange 255. The ring-shaped root end flange 255 is attached to the root end face 17 of the shell body 45, such that the ring-shaped root end flange 255 covers the first bond line 28 (not shown) at the leading edge 18 of the shell body 45, and the bond line marker 270 is aligned with the first bond line 28. The ring-shaped root end flange 55 is further attached to the root end face of the shell body 45, such that it covers the second bond line 29 at the trailing edge 20 of the shell body 45. The ring-shaped root end flange 255 comprises a second bond line marker 271 on the inner circumference 276 of the ring-shaped root end flange 255 and is attached to the root end face of the shell body 45 such that the second bond line marker 271 is aligned with the second bond line 29. The ring-shaped body is further provided with a second pitch-angle marker 273, which has marks on both the inner circumference 276 and on an outer circumference 277 of the ring-shaped root end flange 55. The first pitch-angle marker 272 and the second pitch-angle 273 are preferably aligned with a zero-pitch position of the pitch bearing 56, when the wind turbine blade 10 is mounted to the pitch bearing 56. As shown in Fig. 6a, the first bond line marker 270 is provided near the first pitch-angle marker 272, and the second bond line marker 271 is provided near the second pitch-angle marker 273. The markers may for example be arranged within 10 degrees of each other in a circumferential direction of the ring-shaped root end flange 255, preferably within 8 degrees of each other. The angle between the two markers may for instance be aligned with the design angle of attack of the wind turbine blade 10 at the design point of the wind turbine. The ring-shaped root end flange 255 is further provided with a plurality of holes 275 that are aligned with the plurality of bushings 62 of the wind turbine blade 10. Compared to the first and second embodiment, the ring-shaped root end flange 255 is divided into three segments that each extends along 120 degrees of the ring-shaped root end flange 255. The three segments are connected to each other via mating connections depicted as a dovetail joint.

Fig. 6d shows a fourth embodiment, wherein a ring-shaped root end flange 355 is formed by four segments. The ring-shaped root end flange 355 is attached to the root end face 17 of the shell body 45 and extends circumferentially along the entire root end 16 of the wind turbine blade 10. The ring-shaped root end flange 355 is provided with a first bond line marker 370 on an inner circumference 376 of the ring-shaped root end flange 355 and further provided with a first pitch-angle marker 372, which has marks on both the inner circumference 376 and on an outer circumference 377 of the ring-shaped root end flange 355. The ring-shaped root end flange 355 is attached to the root end face 17 of the shell body 45, such that ring-shaped the root end flange 355 covers the first bond line 28 (not shown) at the leading edge 18 of the shell body 45, and the bond line marker 370 is aligned with the first bond line 28. The ring-shaped root end flange 55 is further attached to the root end face of the shell body 45, such that it covers the second bond line 29 at the trailing edge 20 of the shell body 45. The ring-shaped root end flange 355 comprises a second bond line marker 371 on the inner circumference 376 of the ring-shaped root end flange 355 and is attached to the root end face of the shell body 45 such that the second bond line marker 371 is aligned with the second bond line 29. The ring-shaped body is further provided with a second pitch-angle marker 373, which has marks on both the inner circumference 376 and on an outer circumference 377 of the ring-shaped root end flange 55. The first pitch-angle marker 372 and the second pitch-angle 373 are preferably aligned with a zero-pitch position of the pitch bearing 56, when the wind turbine blade 10 is mounted to the pitch bearing 56. As shown in Fig. 6a, the first bond line marker 370 is provided near the first pitch-angle marker 372, and the second bond line marker 371 is provided near the second pitch-angle marker 373. The markers may for example be arranged within 10 degrees of each other in a circumferential direction of the ring-shaped root end flange 355, preferably within 8 degrees of each other. The angle between the two markers may for instance be aligned with the design angle of attack of the wind turbine blade 10 at the design point of the wind turbine. The ring-shaped root end flange 355 is further provided with a plurality of holes 375 that are aligned with the plurality of bushings 62 of the wind turbine blade 10. Compared to the first, second, and third embodiment, the ring-shaped root end flange 355 is divided into four segments that each extends along 90 degrees of the ring-shaped root end flange 355. The three segments are connected to each other via mating connections depicted as a dovetail joint.

The ring-shaped root end flange may even be divided into 5, 6, 7, 8, 9, 10 or even more segments. In light of wind turbines blades becoming larger and larger, the root diameter also increases. Thereby, it is beneficial to segment the flange parts for easier handling. For very long blades, the ring-shaped root end flange may advantageously be divided into 5-8 individual segments, e.g. 6 or 8 segments. Above, the segments have been described as extending along the same angular extent of the root end of the blade. However, the segments can also have different sizes.

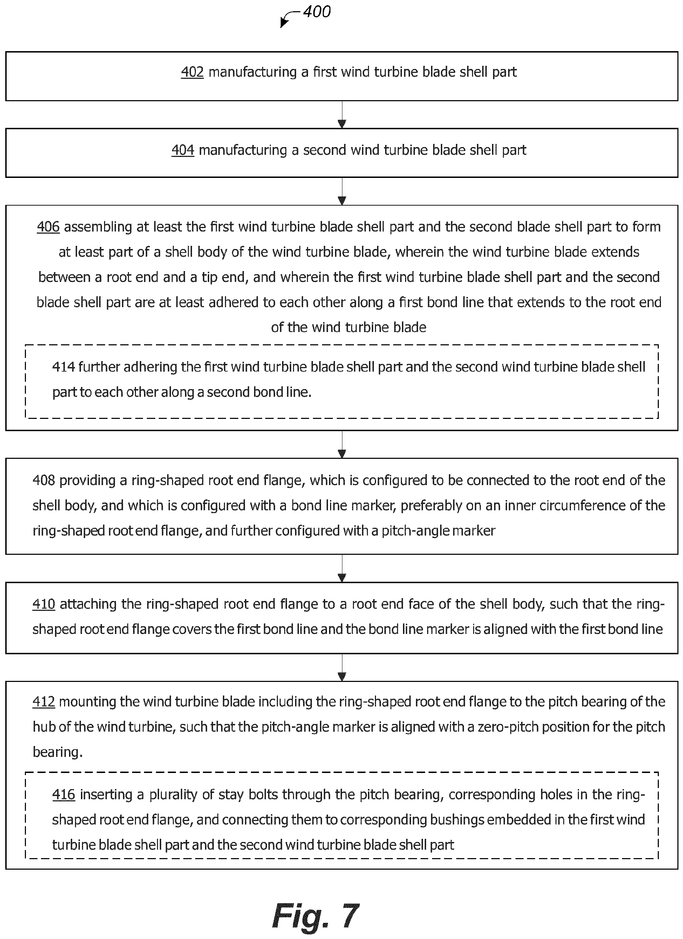

Fig. 7 shows a method 400 of manufacturing a wind turbine blade for a horizontal axis wind turbine (2) and mounting it to the pitch bearing of a hub of a wind turbine. In a first step 402, a first wind turbine blade shell part is manufactured. In a second step 404, a second wind turbine blade shell part is manufactured. In a third step 406, at least the first wind turbine blade shell part and the second wind turbine blade shell part are assembled to form at least part of a shell body of the wind turbine blade, wherein the wind turbine blade extends between a root end and a tip end, and wherein the first wind turbine blade shell part and the second wind turbine blade shell part are at least adhered to each other along a first bond line that extends to the root end of the wind turbine blade. In a fourth step 408, a ring-shaped root end flange is provided. The ring-shaped root end flange is configured to be connected to the root end of the shell body, and is further configured with a bond line marker, preferably on an inner circumference of the ring-shaped root end flange. Further, the ring-shaped root end flange is configured with a pitch-angle marker. In a fifth step 410, the ring-shaped root end flange is attached to a root end face of the shell body, such that the ring-shaped root end flange covers the first bond line, and the bond line marker is aligned with the first bond line. In a sixth step 412, the wind turbine blade including the ring-shaped root end flange is mounted to the pitch bearing of the hub of the wind turbine, such that the pitch-angle marker is aligned with a zero-pitch position for the pitch bearing.

Thereby, there is provided a method that simplifies and optimises the manufacture of wind turbine blades with markings for aligning the blade correctly relative to the pitch bearing of a wind turbine and further provides a simple way of optimising the correct alignment of the wind turbine blade on the pitch bearing of the wind turbine. Thus, the method both simplifies and optimises the manufacture of the blade as well as contributes to avoiding inaccurate pitch alignment that may lead to decrease in energy yield as well as to unintended loads to the rotor of the wind turbine. Further, by letting the ring-shaped root end flange cover the bond line, additional mechanical strength can be provided around the joint at the first bond line.

As described above, the first bond line is preferably located along a leading edge or a trailing edge of the shell body of the wind turbine blade, preferably along the leading edge of the shell body of the wind turbine blade. Thereby, the bond line marker and the pitch-angle marker can be located near each other, in particular if the pitch-angle marker provides a zero-pitch angle marker. As also described above, the first wind turbine blade shell part and the second wind turbine blade shell part are further preferably adhered to each other along a second bond line. Thus, the step 406 of assembling the two shell parts may include the step 414 of further adhering the first wind turbine blade shell part and the second blade shell part to each other along the second bond line. The second bond line may advantageously be located along a trailing edge or a leading edge of the shell body of the wind turbine blade, e.g. along a trailing edge of the shell body of the wind turbine blade. Thus, the wind turbine blade shell may be constructed from half shell parts, such as an upwind shell part and a downwind shell part (or equivalently a pressure side shell part and a suction side shell part). Similarly, the ring-shaped root end flange may be arranged mounted to cover the second bond line. Thus, the ring-shaped root end flange may provide additional mechanical strength around the joint at the second bond line between the two shell parts. According to a preferred embodiment, the ring-shaped root end flange comprises a second bond line marker, preferably on the inner circumference of the ring-shaped root end flange and is attached to the root end face of the shell body such that the second bond line marker is aligned with the second bond line. This provides a further marker to ensure that the pitch-angle marker is arranged correctly and that the blade shell parts are assembled correctly. According to yet another preferred embodiment, the ring-shaped body is further provided with a second pitch-angle marker. The second pitch-angle marker or markers are preferably provided on an inner or outer circumference of the ring-shaped root end flange, or both. The pitch-angle marker may also comprise a line extending along a radius of the ring-shaped root end flange. The second pitch-angle marker provides additional measures to ensure that the wind turbine blade is arranged correctly on the pitch bearing, thereby ensuring optimised loads and energy yield for the installed wind turbine blade.

According to a preferred embodiment, the first wind turbine blade shell part and the second wind turbine blade shell part are manufactured with a plurality of bushings embedded in the respective shell part, and wherein the ring-shaped root end flange is provided with a plurality of holes that are aligned with the plurality of bushings. Thus, the bushings can be utilised to attach the blade along with the ring-shaped root flange to the pitch bearing via stay bolts attached through corresponding holes in inner or outer bearings of the pitch bearing. Accordingly, according to another preferred embodiment, the mounting of the wind turbine blade comprises the step 416 of inserting a plurality of stay bolts through the pitch bearing, corresponding holes in the ring-shaped root end flange, and connecting them to corresponding bushings embedded in the first wind turbine blade shell part and the second wind turbine blade shell part.

### Exemplary embodiments

Exemplary embodiments of the present disclosure are set out in the following items:
1. A method of manufacturing a wind turbine blade for a horizontal axis wind turbine (2), and mounting it to the pitch bearing of a hub of a wind turbine, wherein the method comprises the steps of:
   manufacturing (402) a first wind turbine blade shell part;
   manufacturing (404) a second wind turbine blade shell part;
   assembling (406) at least the first wind turbine blade shell part and the second wind turbine blade shell part to form at least part of a shell body of the wind turbine blade, wherein the wind turbine blade extends between a root end and a tip end, and wherein the first wind turbine blade shell part and the second wind turbine blade shell part are at least adhered to each other along a first bond line that extends to the root end of the wind turbine blade;
   providing (408) a ring-shaped root end flange, which is configured to be connected to the root end of the shell body, and which is configured with a bond line marker, preferably on an inner circumference of the ring-shaped root end flange, and further configured with a pitch-angle marker;
   attaching (410) the ring-shaped root end flange to a root end face of the shell body, such that the ring-shaped root end flange covers the first bond line, and the bond line marker is aligned with the first bond line; and
   mounting (412) the wind turbine blade including the ring-shaped root end flange to the pitch bearing of the hub of the wind turbine, such that the pitch-angle marker is aligned with a zero-pitch position for the pitch bearing.
2. A method according to item 1, wherein the first bond line is located along a leading edge or a trailing edge of the shell body of the wind turbine blade, e.g. along the leading edge of the shell body of the wind turbine blade.
3. A method according to any of the preceding items, wherein the bond line marker and the pitch-angle marker are arranged near each other, such as within 10 degrees of each other along the ring-shaped root end flange, preferably within 8 degrees of each other.
4. A method according to any of the preceding items, wherein the first wind turbine blade shell part and the second wind turbine blade shell part are further adhered (414) to each other along a second bond line.
5. A method according to item 4, wherein the second bond line is located along a trailing edge or a leading edge of the shell body of the wind turbine blade, e.g. along a trailing edge of the shell body of the wind turbine blade.
6. A method according to any of items 4-5, wherein the ring-shaped root end flange is mounted to cover the second bond line.
7. A method according to item 6, wherein the ring-shaped root end flange comprises a second bond line marker, preferably on the inner circumference of the ring-shaped root end flange, and is attached to the root end face of the shell body such that the second bond line marker is aligned with the second bond line.
8. A method according to any of the preceding items, wherein the ring-shaped body is further provided with a second pitch-angle marker.
9. A method according to items 7 and 8, wherein the second bond line marker and the second pitch-angle marker are arranged near each other, such as within 10 degrees of each other along the ring-shaped root end flange, preferably within 8 degrees of each other.
10. A method according to any of the preceding items, wherein the first wind turbine blade shell part and the second wind turbine blade shell part are manufactured with a plurality of bushings embedded in the respective shell part, and wherein the ring-shaped root end flange is provided with a plurality of holes that are aligned with the plurality of bushings.
11. A method according to item 10, wherein the mounting of the wind turbine blade comprises inserting a plurality of stay bolts through the pitch bearing, corresponding holes in the ring-shaped root end flange, and connecting (416) them to corresponding bushings embedded in the first wind turbine blade shell part and the second wind turbine blade shell part.
12. A method according to any of the preceding items, wherein the ring-shaped root end flange is segmented into a plurality of individual flange parts that together form the ring-shaped root end flange.
13. A method according to item 12, wherein the plurality of individual flange parts is connected to each other, e.g. via a mating connection, such as a dovetail joint.
14. A method according to any of items 12-13, wherein the ring-shaped root end flange comprises one of:
   two individual flange parts, each extending along 180 degrees of the ring-shaped root end flange;
   three individual flange parts, each extending along 120 degrees of the ring-shaped root end flange; and
   four individual flange parts, each extending along 90 degrees of the ring-shaped root end flange.
15. A method according to any of the preceding items, wherein the ring-shaped root end flange is made from a metal, such as stainless steel.
16. A wind turbine blade (10) for a horizontal axis wind turbine (2), wherein the wind turbine blade (10) extends in a longitudinal direction parallel to a longitudinal axis and having a tip end (14) and a root end (16), and wherein the wind turbine blade (10) comprises:
   a shell body (45), which is formed by at least a first wind turbine blade shell part (24) and a second wind turbine blade shell part (26), wherein the first wind turbine blade shell part (24) and the second wind turbine blade shell part (26) are at least adhered to each other along a first bond line (28) that extends to the root end (16) of the wind turbine blade (10), and
   a ring-shaped root end flange (55, 155, 255, 355) attached to a root end face of the shell body (45) and extending circumferentially along the entire root end (16) of the wind turbine blade (10), wherein the ring-shaped root end flange (55, 155, 255, 355) is provided with a bond line marker, preferably on an inner circumference (76, 176, 276, 376) of the ring-shaped root end flange (55, 155, 255, 355), and further provided with a pitch-angle marker (72, 172, 272, 372);
   wherein the ring-shaped root end flange (55, 155, 255, 355) is attached to the root end face of the shell body (45), such that the ring-shaped root end flange (55, 155, 255, 355) covers the first bond line (28) and the bond line marker (70, 170, 270, 370) is aligned with the first bond line (28).
17. A wind turbine blade according to item 16, wherein the first bond line (28) is located along a leading edge (18) or a trailing edge (20) of the shell body (45) of the wind turbine blade (10), e.g. along the leading edge (18) of the shell body (45) of the wind turbine blade (10).
18. A wind turbine blade according to any of items 16-17, wherein the bond line marker (70, 170, 270, 370) and the pitch-angle marker (72, 172, 272, 372) are arranged near each other, such as within 10 degrees of each other in a circumferential direction of the ring-shaped root end flange (55, 155, 255, 355), preferably within 8 degrees of each other.
19. A wind turbine blade according to any of items 16-18, wherein the first wind turbine blade shell part (24) and the second wind turbine blade shell part (26) are further adhered to each other along a second bond line.
20. A wind turbine blade according to item 19, wherein the second bond line is located along a trailing edge (20) or a leading edge (18) of the shell body (45) of the wind turbine blade, e.g. along a trailing edge (20) of the shell body (45) of the wind turbine blade (10).
21. A wind turbine blade according to any of items 19-20, wherein the ring-shaped root end flange (55, 155, 255, 355) is attached to the root end face of the shell body (45), such that it covers the second bond line.
22. A wind turbine blade according to item 21, wherein the ring-shaped root end flange (55, 155, 255, 355) comprises a second bond line marker (71, 171, 271, 371), preferably on the inner circumference (76, 176, 276, 376) of the ring-shaped root end flange (55, 155, 255, 355), and is attached to the root end face of the shell body (45) such that the second bond line marker (71, 171, 271, 371) is aligned with the second bond line.
23. A wind turbine blade according to any of items 16-22, wherein the ring-shaped body is further provided with a second pitch-angle marker (73, 173, 273, 373).
24. A wind turbine blade according to items 22 and 23, wherein the second bond line marker (71, 171, 271, 371) and the second pitch-angle marker (73, 173, 273, 373) are arranged near each other, such as within 10 degrees of each other in a circumferential direction of the ring-shaped root end flange (55, 155, 255, 355), preferably within 8 degrees of each other.
25. A wind turbine blade according to any of items 16-24, wherein the first wind turbine blade shell part (24) and the second wind turbine blade shell part (26) each comprise a plurality of bushings embedded in the respective shell part, and wherein the ring-shaped root end flange (55, 155, 255, 355) is provided with a plurality of holes that are aligned with the plurality of bushings.
26. A wind turbine blade according to any of items 16-25, wherein the ring-shaped root end flange (55, 155, 255, 355) is segmented into a plurality of individual flange parts that together form the ring-shaped root end flange (55, 155, 255, 355).
27. A wind turbine blade according to item 26, wherein the plurality of individual flange parts is connected to each other, e.g. via a mating connection, such as a dovetail joint.
28. A wind turbine blade according to any of items 26-27, wherein the ring-shaped root end flange (55, 155, 255, 355) comprises one of:
   two individual flange parts, each extending along 180 degrees of the ring-shaped root end flange (55, 155, 255, 355);
   three individual flange parts, each extending along 120 degrees of the ring-shaped root end flange (55, 155, 255, 355); and
   four individual flange parts, each extending along 90 degrees of the ring-shaped root end flange (55, 155, 255, 355).
29. A wind turbine blade according to any of items 16-28, wherein the ring-shaped root end flange (55, 155, 255, 355) is made from a metal, such as stainless steel.
30. A horizontal axis wind turbine (2) comprising a rotor including a hub and a number, preferably two or three, wind turbine blades (10) according to any of items 16-29, wherein each wind turbine blade (10) is attached to a pitch bearing in the hub, such that the pitch-angle marker (72, 172, 272, 372) of the wind turbine blade is aligned with a zero-pitch position for the pitch bearing (56).
31. A wind turbine according to item 30, wherein each wind turbine blade (10) is mounted to the pitch bearing (56) via a plurality of stay bolts through the pitch bearing, corresponding holes in the ring-shaped root end flange (55, 155, 255, 355) of the wind turbine blade (10), and connected to corresponding bushings embedded in the first wind turbine blade shell part (24) and the second wind turbine blade shell part (26).
32. A wind turbine according to any of items 30-31, wherein each pitch bearing (56) comprises an inner pitch bearing ring (65) and an outer pitch bearing ring (67), which are pitchable relative to each other.
33. A wind turbine according to any of items 30-32, wherein each wind turbine blade (10) is mounted to the inner pitch bearing ring (65) of the pitch bearing (56).

### List of reference numerals

| | |
|---|---|
| 2 | Wind turbine |
| 4 | Tower |
| 6 | Nacelle |
| 8 | Hub |
| 10 | Blade |
| 14 | Blade tip |
| 16 | Blade root |
| 17 | Root end face |
| 18, 57 | Leading edge |
| 20, 58 | Trailing edge |
| 22 | Pitch axis |
| 24 | Pressure side or upwind shell part |
| 26 | Suction side or downwind shell part |
| 28 | First bond line |
| 29 | Second bond line |
| 30 | Root region |
| 32 | Transition region |
| 34 | Airfoil region |
| 40 | Circular profile |
| 42 | Transition profile |
| 45 | Shell body |
| 48 | Shoulder |
| 50 | Airfoil profile |
| 52 | Pressure/windward/upwind side |
| 54 | Suction/leeward/downwind side |
| 55, 155, 255, 355 | Root end flange |
| 56 | Pitch bearing |
| 60 | Chord |
| 61 | Camber |
| 62 | Fasteners / bushings |
| 63 | Stay bolts |
| 65 | Inner ring of pitch bearing |
| 66 | Ball bearings |
| 67 | Outer ring of pitch bearing |
| 68 | Bolts |
| 70, 170, 270, 370 | First bond line marker |
| 71, 171, 271, 371 | Second bond line marker |
| 72, 172, 272, 372 | First pitch-angle marker |
| 73, 173, 273, 373 | Second pitch-angle marker |
| 75, 175, 275, 375 | Holes |
| 76, 176, 276, 376 | Inner circumference |
| 77, 177, 277, 377 | Outer circumference |
| 178, 278, 378 | Mating connection |

## Claims

1. A method of manufacturing a wind turbine blade for a horizontal axis wind turbine (2), and mounting it to the pitch bearing of a hub of a wind turbine, wherein the method comprises the steps of:
manufacturing (402) a first wind turbine blade shell part;
manufacturing (404) a second wind turbine blade shell part;
assembling (406) at least the first wind turbine blade shell part and the second wind turbine blade shell part to form at least part of a shell body of the wind turbine blade, wherein the wind turbine blade extends between a root end and a tip end, and wherein the first wind turbine blade shell part and the second wind turbine blade shell part are at least adhered to each other along a first bond line that extends to the root end of the wind turbine blade;
providing (408) a ring-shaped root end flange, which is configured to be connected to the root end of the shell body, and which is configured with a bond line marker, preferably on an inner circumference of the ring-shaped root end flange, and further configured with a pitch-angle marker;
attaching (410) the ring-shaped root end flange to a root end face of the shell body, such that the ring-shaped root end flange covers the first bond line, and the bond line marker is aligned with the first bond line; and
mounting (412) the wind turbine blade including the ring-shaped root end flange to the pitch bearing of the hub of the wind turbine, such that the pitch-angle marker is aligned with a zero-pitch position for the pitch bearing.

2. A method according to claim 1, wherein the first bond line is located along a leading edge or a trailing edge of the shell body of the wind turbine blade, e.g. along the leading edge of the shell body of the wind turbine blade.

3. A method according to any of the preceding claims, wherein the first wind turbine blade shell part and the second wind turbine blade shell part are further adhered (414) to each other along a second bond line,
wherein the ring-shaped root end flange is mounted to cover the second bond line.

4. A method according to claim 3, wherein the ring-shaped root end flange comprises a second bond line marker, preferably on the inner circumference of the ring-shaped root end flange, and is attached to the root end face of the shell body such that the second bond line marker is aligned with the second bond line.

5. A method according to any of the preceding claims, wherein the first wind turbine blade shell part and the second wind turbine blade shell part are manufactured with a plurality of bushings embedded in the respective shell part, and wherein the ring-shaped root end flange is provided with a plurality of holes that are aligned with the plurality of bushings, and
wherein the mounting of the wind turbine blade comprises inserting a plurality of stay bolts through the pitch bearing, corresponding holes in the ring-shaped root end flange, and connecting (416) them to corresponding bushings embedded in the first wind turbine blade shell part and the second wind turbine blade shell part.

6. A wind turbine blade (10) for a horizontal axis wind turbine (2), wherein the wind turbine blade (10) extends in a longitudinal direction parallel to a longitudinal axis and having a tip end (14) and a root end (16), and wherein the wind turbine blade (10) comprises:
a shell body (45), which is formed by at least a first wind turbine blade shell part (24) and a second wind turbine blade shell part (26), wherein the first wind turbine blade shell part (24) and the second wind turbine blade shell part (26) are at least adhered to each other along a first bond line (28) that extends to the root end (16) of the wind turbine blade (10), and
a ring-shaped root end flange (55, 155, 255, 355), preferably made of a metal, such as stainless steel, attached to a root end face of the shell body (45) and extending circumferentially along the entire root end (16) of the wind turbine blade (10), wherein the ring-shaped root end flange (55, 155, 255, 355) is provided with a bond line marker, preferably on an inner circumference (76, 176, 276, 376) of the ring-shaped root end flange (55, 155, 255, 355), and further provided with a pitch-angle marker (72, 172, 272, 372);
wherein the ring-shaped root end flange (55, 155, 255, 355) is attached to the root end face of the shell body (45), such that the ring-shaped root end flange (55, 155, 255, 355) covers the first bond line (28) and the bond line marker (70, 170, 270, 370) is aligned with the first bond line (28).

7. A wind turbine blade according to claim 6, wherein the first wind turbine blade shell part (24) and the second wind turbine blade shell part (26) are further adhered to each other along a second bond line, preferably wherein the ring-shaped root end flange (55, 155, 255, 355) is attached to the root end face of the shell body (45), such that it covers the second bond line, and further preferably wherein the ring-shaped root end flange (55, 155, 255, 355) comprises a second bond line marker (71, 171, 271, 371), preferably on the inner circumference (76, 176, 276, 376) of the ring-shaped root end flange (55, 155, 255, 355), and is attached to the root end face of the shell body (45) such that the second bond line marker (71, 171, 271, 371) is aligned with the second bond line.

8. A wind turbine blade according to any of claims 6-7,
wherein the first bond line (28) is located along a leading edge (18) or a trailing edge (20) of the shell body (45) of the wind turbine blade (10), e.g. along the leading edge (18) of the shell body (45) of the wind turbine blade (10), and/or
wherein the second bond line is located along a trailing edge (20) or a leading edge (18) of the shell body (45) of the wind turbine blade, e.g. along a trailing edge (20) of the shell body (45) of the wind turbine blade (10).

9. A wind turbine blade according to any of claims 6-8, wherein the ring-shaped body is further provided with a second pitch-angle marker (73, 173, 273, 373).

10. A wind turbine blade according to any of claims 6-9,
wherein the bond line marker (70, 170, 270, 370) and the pitch-angle marker (72, 172, 272, 372) are arranged near each other, such as within 10 degrees of each other in a circumferential direction of the ring-shaped root end flange (55, 155, 255, 355), preferably within 8 degrees of each other, and/or
wherein the second bond line marker (71, 171, 271, 371) and the second pitch-angle marker (73, 173, 273, 373) are arranged near each other, such as within 10 degrees of each other in a circumferential direction of the ring-shaped root end flange (55, 155, 255, 355), preferably within 8 degrees of each other.

11. A wind turbine blade according to any of claims 6-10, wherein the ring-shaped root end flange (55, 155, 255, 355) is segmented into a plurality of individual flange parts that together form the ring-shaped root end flange (55, 155, 255, 355), e.g.
wherein the plurality of individual flange parts is connected to each other, e.g. via a mating connection, such as a dovetail joint.

12. A horizontal axis wind turbine (2) comprising a rotor including a hub and a number, preferably two or three, wind turbine blades (10) according to any of claims 6-11, wherein each wind turbine blade (10) is attached to a pitch bearing in the hub, such that the pitch-angle marker (72, 172, 272, 372) of the wind turbine blade is aligned with a zero-pitch position for the pitch bearing (56).

13. A wind turbine according to claim 12, wherein each wind turbine blade (10) is mounted to the pitch bearing (56) via a plurality of stay bolts through the pitch bearing, corresponding holes in the ring-shaped root end flange (55, 155, 255, 355) of the wind turbine blade (10), and connected to corresponding bushings embedded in the first wind turbine blade shell part (24) and the second wind turbine blade shell part (26).

14. A wind turbine according to any of claims 12-13, wherein each pitch bearing (56) comprises an inner pitch bearing ring (65) and an outer pitch bearing ring (67), which are pitchable relative to each other.

15. A wind turbine according to any of claims 12-14, wherein each wind turbine blade (10) is mounted to the inner pitch bearing ring (65) of the pitch bearing (56).
